(19) Europäisches Patentamt
European Patent Office
Office européen des brevets

(11) **EP 3 201 444 B1**

(12) **FASCICULE DE BREVET EUROPEEN**

(45) Date de publication et mention
de la délivrance du brevet:
**27.03.2019 Bulletin 2019/13**

(21) Numéro de dépôt: **15771204.3**

(22) Date de dépôt: **11.09.2015**

(51) Int Cl.:
**F01N 11/00** *(2006.01)*

(86) Numéro de dépôt international:
**PCT/FR2015/052428**

(87) Numéro de publication internationale:
**WO 2016/051038 (07.04.2016 Gazette 2016/14)**

(54) **PROCÉDÉ D'ESTIMATION DU VIEILLISSEMENT D'UN CATALYSEUR DE VÉHICULE AUTOMOBILE**

VERFAHREN ZUR SCHÄTZUNG DER ALTERUNG EINES KRAFTFAHRZEUGKATALYSATORS

METHOD FOR ESTIMATING THE AGEING OF A MOTOR VEHICLE CATALYST

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.10.2014 FR 1459461**

(43) Date de publication de la demande:
**09.08.2017 Bulletin 2017/32**

(73) Titulaire: **PSA Automobiles SA**
**78300 Poissy (FR)**

(72) Inventeurs:
• **SCHEEN-VASSEUR, Grégory**
**1170 Bruxelles (BE)**

• **CLIMAUD, Pascal**
**92420 Vaucresson (FR)**
• **CORNETTE, Annabelle**
**92800 Puteaux (FR)**
• **GLATIGNY, Bruno**
**78600 Maisons-Laffitte (FR)**

(74) Mandataire: **Bourguignon, Eric Pascal Jean et al**
**PSA Automobiles SA**
**VEIP - VV1400**
**Route de Gisy**
**78140 Velizy Villacoublay (FR)**

(56) Documents cités:
EP-A1- 2 031 207        WO-A1-2013/178495
DE-A1-102007 031 768    DE-A1-102013 200 573
GB-A- 2 475 318         US-B1- 8 834 820

# Description

L'invention porte sur un procédé d'estimation et de contrôle du vieillissement d'un catalyseur de véhicule automobile. Ce procédé peut avantageusement conduire à la détection d'un conducteur dont le mode de conduite est sévère et provoque un vieillissement accéléré du catalyseur.

Le domaine technique de l'invention se situe au niveau du contrôle moteur d'un moteur à essence et plus particulièrement pour un estimateur de l'état du catalyseur pour la dépollution d'un moteur à essence, mais ceci n'est pas limitatif et peut être appliqué à d'autres carburants.

Un tel procédé d'estimation du vieillissement d'un catalyseur de véhicule automobile est par exemple connu du document US-B1-8 834 820.

Le but est de fournir un estimateur du vieillissement du catalyseur le plus précis possible de manière à pouvoir l'utiliser en entrée de la définition des réglages mis en oeuvre pour la dépollution du moteur essence, par exemple la durée de chauffe du catalyseur, la stimulation du catalyseur, la fenêtre du catalyseur, les consignes de richesse de mise en action du catalyseur, etc. Une détection des conducteurs ayant un mode de conduite sévère pour le vieillissement catalyseur est également possible avec un tel procédé d'estimation du vieillissement du catalyseur.

La plupart des estimateurs de vieillissement d'un catalyseur s'appuient sur le kilométrage du véhicule pour fournir une image de l'état du catalyseur, le kilométrage du véhicule étant alors le paramètre de fonctionnement du véhicule servant de paramètre d'évaluation du vieillissement du catalyseur. Parfois, le résultat partiel d'un diagnostic relatif au catalyseur est utilisé pour déterminer de manière binaire l'état de vieillissement du catalyseur.

Ces données sont en général utilisées en entrée de cartographies définissant directement un des réglages pour la dépollution ou des calibrations d'estimateur et définissant le facteur d'interpolation entre un réglage adapté pour un catalyseur neuf et un réglage adapté pour un catalyseur à la limite d'émissions, par exemple le réglage de dépollution ou la calibration de l'estimateur.

Le désavantage de ce type de construction est de ne s'appuyer que sur une information unique consistant en un paramètre de fonctionnement du véhicule, par exemple le kilométrage parcouru par le véhicule automobile ou incomplète, comme par exemple un résultat de diagnostic sur une mesure partielle de capacité du catalyseur à stocker l'oxygène pour choisir les réglages adéquats des lois de commande.

Il arrive donc que le réglage construit ne soit pas optimal, voire pas représentatif de l'état réel du catalyseur car ce dernier aurait pu vieillir plus ou moins vite que la normale selon le cycle de conduite du conducteur.

Ce manque de cohérence avec la réalité implique premièrement une surémission du véhicule dans le cas où l'information relative au vieillissement du catalyseur est utilisée pour un réglage de dépollution. Cela est particulièrement critique pour les catalyseurs fortement vieillis, pour lesquels un mauvais réglage se traduit très rapidement par de fortes émissions.

Ce manque de cohérence avec la réalité implique secondement une dérive de l'estimateur du contrôle commande du moteur du véhicule automobile. Comme exemple non limitatif, il peut être énoncé qu'une dérive de l'estimateur de la température du catalyseur peut entraîner une surévaluation ou sous-évaluation de celle-ci. A terme, cela implique une mauvaise application des consignes de richesse de protection des composants et peut donc entraîner une surconsommation du moteur ou un vieillissement accéléré du catalyseur.

Le document DE-A-102007031768 traite de l'injection d'air dans une ligne d'échappement de véhicule automobile. Le but est de réduire la quantité de chaleur apportée au catalyseur par les stratégies classiques, notamment la dégradation d'avance, ou par l'injection d'air à l'échappement en fonction du vieillissement du catalyseur. Plusieurs entrées de paramètres du catalyseur sont utilisées pour estimer le vieillissement du catalyseur, ce qui rend le suivi du vieillissement du catalyseur compliqué et sujet à caution.

Par conséquent, le problème à la base de l'invention est de concevoir un procédé d'estimation du vieillissement d'un catalyseur de véhicule automobile basé sur un paramètre de fonctionnement du véhicule dans lequel ledit paramètre est réajusté en fonctionnement du véhicule afin de correspondre le mieux possible avec le vieillissement du catalyseur.

Pour atteindre cet objectif, il est prévu selon l'invention un procédé d'estimation et de contrôle du vieillissement d'un catalyseur se trouvant dans la ligne d'échappement d'un véhicule automobile conformément à l'objet de la revendication 1.

De préférence, le catalyseur est de type catalyseur trois voies.

De préférence encore, le moteur thermique équipé de la ligne d'échappement en question est un moteur de type essence.

L'effet technique est d'obtenir une unique information représentative du vieillissement du catalyseur sous la forme d'un unique paramètre d'évaluation du vieillissement du catalyseur réajusté. Cet unique paramètre d'évaluation réajusté sera alors une valeur issue du paramètre de fonctionnement servant de paramètre d'évaluation du vieillissement du catalyseur du véhicule comme valeur de base mais dont on vient ajuster la valeur lorsqu'une information complémentaire démontre à coup sûr que le catalyseur est plus vieux que la normale attendue pour le paramètre de fonctionnement du véhicule courant.

Le suivi d'un tel unique paramètre d'évaluation du vieillissement du catalyseur réajusté est plus simple que de contrôler plusieurs paramètres spécifiques au catalyseur en même temps pour déterminer si le vieillissement estimé du catalyseur par le suivi du paramètre de fonctionnement du véhicule servant de paramètre d'évaluation du vieillissement du catalyseur est juste ou non.

Avantageusement, ledit au moins un paramètre spécifique est choisi parmi les paramètres suivants spécifiques au catalyseur ou est une combinaison d'au moins deux des paramètres suivants : la mesure de la capacité du catalyseur à stocker l'oxygène, la mesure de l'exotherme du catalyseur ou, quand la ligne d'échappement est équipée d'une sonde en sortie du catalyseur, la dérive de la richesse mesurée par la sonde ainsi que l'amplitude d'oscillation de la sonde.

Avantageusement, une moyenne de plusieurs mesures effectuées dudit au moins un paramètre spécifique au catalyseur est prise comme paramètre spécifique au catalyseur.

Avantageusement, une ou des mesures effectuées dudit au moins un paramètre spécifique présentant une divergence par rapport aux autres mesures effectuées dépassant un niveau prédéterminé ne sont pas prises en compte pour le calcul de la moyenne.

Avantageusement, le paramètre d'évaluation réajusté est calculé selon une cartographie donnant ce paramètre d'évaluation en fonction dudit au moins un paramètre spécifique au catalyseur.

Avantageusement, il est défini une conduite dite sévère par comparaison entre les deux courbes quand les courbes divergent au dessous d'un seuil prédéterminé, une information quant à la criticité du mode de conduite pour le vieillissement du catalyseur étant émise. En cas d'écart important entre le paramètre de fonctionnement du véhicule et le paramètre d'évaluation réajusté, le mode de conduite du conducteur peut donc être identifié comme sévère pour le vieillissement catalyseur.

D'autres caractéristiques, buts et avantages de la présente invention apparaîtront à la lecture de la description détaillée qui va suivre et au regard des dessins annexés donnés à titre d'exemples non limitatifs et sur lesquels :

- la figure 1 est une courbe donnant la capacité à stocker l'oxygène du catalyseur en fonction du kilométrage parcouru, cette capacité servant de paramètre spécifique du catalyseur dans le procédé d'estimation du vieillissement d'un catalyseur selon la présente invention,
- la figure 2 est une représentation schématique d'un diagramme indiquant les étapes du procédé d'estimation du vieillissement d'un catalyseur selon la présente invention.

Il est à garder à l'esprit que les figures sont données à titre d'exemples et ne sont pas limitatives de l'invention. En particulier, si la capacité à stocker l'oxygène, aussi connu sous la dénomination OSC, sert de paramètre spécifique du catalyseur dans l'illustration du procédé d'estimation du vieillissement d'un catalyseur selon la présente invention, ceci n'est pas limitatif et peut être étendu à toute autre paramètre du catalyseur mesurable qui évolue le temps et peut être lié à l'état de vieillissement du catalyseur.

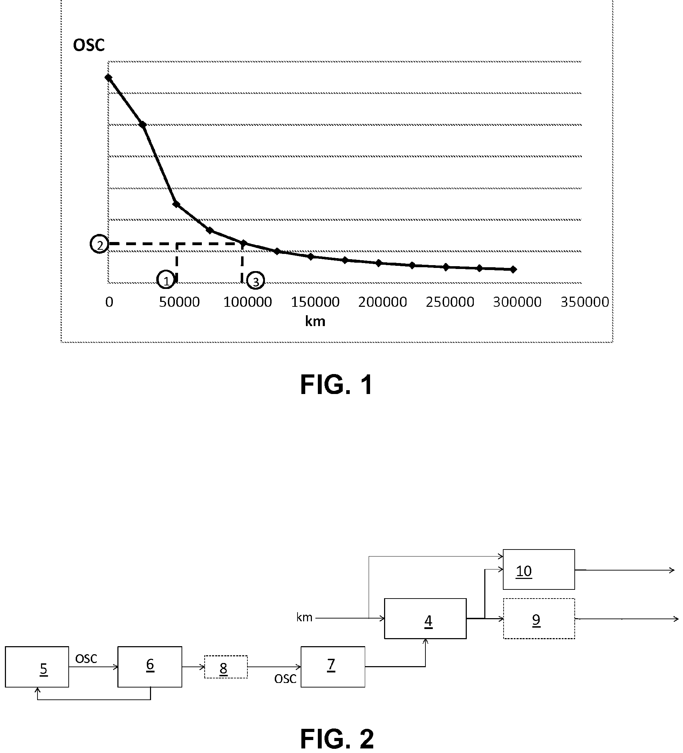

Physiquement, la capacité à stocker l'oxygène du catalyseur diminue au fur et à mesure que le catalyseur vieillit. Lors de la conception du système de catalyse et la calibration des lois de commandes, des hypothèses sont prises quant à l'évolution de la capacité à stocker l'oxygène du catalyseur en fonction du temps. Ceci peut être vu à la figure 1 à laquelle la capacité à stocker l'oxygène du catalyseur est illustrée en fonction du kilométrage parcouru par le véhicule.

Ces hypothèses permettent de définir le grammage du catalyseur afin de respecter les normes d'émissions à neuf et à la durabilité, par exemple d'environ 160.000 km. Elles permettent également aux metteurs au point de définir les réglages optimaux pour la dépollution du catalyseur à neuf et pour la durabilité ainsi que le calibrage des modèles de catalyseur en fonction du temps.

Ces hypothèses d'évolution de la capacité à stocker l'oxygène du catalyseur en fonction du kilométrage véhicule sont faites en s'appuyant sur le retour d'expérience des précédentes mesures et représentent une évolution nominale de la capacité.

Cependant, comme chaque conducteur a un mode de conduite qui lui est propre, il est fréquent que l'évolution réelle de la capacité à stocker l'oxygène du catalyseur s'écarte de la courbe montrée à la figure 1. Comme déjà mentionné, en cas d'écart très important, les calibrations du contrôle commande ne seront pas adaptées à l'état réel du catalyseur.

La présente invention entend remédier à ces inconvénients. Conformément à la présente invention, le procédé d'estimation du vieillissement d'un catalyseur se trouvant dans la ligne d'échappement d'un véhicule automobile, dans lequel un paramètre de fonctionnement du véhicule sert de paramètre d'évaluation du vieillissement du catalyseur, est caractérisé en ce que ce paramètre d'évaluation est corrigé en prenant en compte au moins un paramètre spécifique au catalyseur conduisant à une détermination d'un unique paramètre d'évaluation réajusté pour le suivi du vieillissement du catalyseur, ce qui est une simplification du procédé par rapport aux procédés surveillant plusieurs paramètres.

Ledit au moins un paramètre spécifique peut être choisi parmi les paramètres suivants spécifiques au catalyseur ou est une combinaison d'au moins deux des paramètres suivants : la mesure de la capacité du catalyseur à stocker l'oxygène, la mesure de l'exotherme du catalyseur ou, quand la ligne d'échappement est équipée d'une sonde en sortie du catalyseur, la dérive de la richesse mesurée par la sonde ainsi que l'amplitude d'oscillation de la sonde.

Dans le mode de réalisation préférentiel, il est procédé à une mesure complète de la quantité de stockage d'oxygène du catalyseur. La mesure de la quantité de stockage d'oxygène du catalyseur est connue indépendamment du procédé d'estimation du vieillissement et est déjà exploitée à des fins de diagnostic du catalyseur, ce qui permet d'utiliser un moyen de mesure de cette quantité de stockage d'oxygène déjà présent dans la ligne d'échappement.

Comme paramètre de fonctionnement du véhicule servant de paramètre d'évaluation, le kilométrage parcouru par le véhicule automobile équipé du catalyseur est avantageusement choisi dans un mode préférentiel de l'invention.

Il est aussi possible de se baser sur un autre paramètre de fonctionnement du véhicule que le kilométrage. Par exemple, il est possible de reconstruire un temps de fonctionnement ajusté du catalyseur et de le comparer au temps de fonctionnement du véhicule.

De ce fait, il est possible de combiner dans un procédé d'estimation du vieillissement un paramètre d'évaluation du catalyseur autre que sa capacité de stockage de l'oxygène combiné avec un paramètre de fonctionnement étant le kilométrage du véhicule ou avec un paramètre de fonctionnement du véhicule autre que le kilométrage.

A la figure 1, un kilométrage véhicule de 50.000 km référencé 1 un diagnostic du catalyseur est effectué et délivre une valeur de capacité à stocker l'oxygène complète d'un certain niveau référencé 2. On peut utiliser ce niveau pour vérifier le kilométrage ajusté correspondant à l'état du catalyseur. Dans le cas de la figure 1, il correspond à un kilométrage ajusté du catalyseur de 100.000 km, référencé 3, et indique donc un vieillissement plus important du catalyseur par rapport aux hypothèses nominales de conception.

Ce kilométrage ajusté peut être mis en mémoire pour représenter l'état du catalyseur et estimer son évolution jusqu'à la prochaine mesure complète de capacité à stocker l'oxygène. Dans le cas de la figure 1, on peut avoir les équations suivantes :

$$km_{cata} = km_{cata_{mesureOSC}} + \Delta km_{véhicule}$$

le $km_{cata}$ est un paramètre représentant le vieillissement du catalyseur, il représente le kilométrage véhicule qu'il aurait fallu parcourir pour atteindre le niveau de vieillissement du catalyseur réel observé lors de la mesure complète de capacité à stocker l'oxygène.

le $km_{catamesureOSC}$ étant le kilométrage ajusté selon la dernière mesure de la capacité à stocker l'oxygène et,

le $\Delta km_{véhicule}$ étant l'augmentation du kilométrage du véhicule entre la dernière mesure complète de capacité à stocker l'oxygène et l'instant présent. Pour pouvoir calculer cette valeur, il est également nécessaire de mettre en mémoire le kilométrage du véhicule au moment de la mesure complète de capacité à stocker l'oxygène.

Au début de la vie du véhicule, avant que la première mesure complète de capacité à stocker l'oxygène n'ait eu lieu, on considère que le kilométrage du catalyseur, c'est-à-dire le kilométrage de référence pour le contrôle du catalyseur, correspond au kilométrage du véhicule. C'est avec le temps que les conditions de roulage imposées par le conducteur vont avoir un impact sur le vieillissement du catalyseur et que le kilométrage ajusté, représentatif du vieillissement réel du catalyseur, peut s'éloigner du kilométrage du véhicule.

Ainsi, d'une manière générale, le paramètre de fonctionnement du véhicule servant de paramètre d'évaluation initial, à la figure 1 le kilométrage parcouru, peut être mesuré à un instant donné de même que ledit au moins un paramètre spécifique au catalyseur, à la figure 1 la capacité à stocker l'oxygène du catalyseur, un unique paramètre d'évaluation réajusté, c'est-à-dire à la figure 1 un kilométrage parcouru, étant alors déterminé selon ce paramètre spécifique au catalyseur mesuré. Le paramètre d'évaluation réajusté remplace alors le paramètre d'évaluation initial quand représentatif d'un vieillissement plus prononcé du catalyseur.

Avantageusement, le paramètre d'évaluation réajusté peut être calculé selon une cartographie donnant ce paramètre d'évaluation en fonction dudit au moins un paramètre spécifique au catalyseur, ce qui est montré à la figure 1.

Comme la mesure complète de capacité de stockage de l'oxygène sert à la détermination du kilométrage réajusté, une grande précision de cette mesure est donc souhaitable pour assurer une adaptation efficace pour l'estimation du vieillissement du catalyseur. Comme toute mesure, elle présente une certaine incertitude et plusieurs actions peuvent donc être mises en oeuvre pour éviter toute évolution non réaliste du facteur de vieillissement :

-  il peut être procédé à une pluralité de prises de mesure complète de capacité de stockage d'oxygène avant de réajuster un modèle de vieillissement du catalyseur. Ceci permet de faire une moyenne des mesures, voire de rejeter les mesures estimées non conformes en les comparant avec les résultats précédents.

-  il peut être procédé à une interdiction de revenir à un kilométrage équivalent inférieur à la valeur précédente : selon les cas, l'option bien que restrictive, peut être intéressante, en particulier si des actions plus ou moins lourdes sont engagées au niveau du contrôle commande au-delà d'un certain seuil de vieillissement.

Ceci est aussi valable quand la capacité de stockage d'oxygène n'est pas le paramètre spécifique au catalyseur pour réajuster le paramètre d'évaluation du vieillissement du catalyseur. Ainsi de manière générale, la moyenne de plusieurs mesures effectuées dudit au moins un paramètre spécifique au catalyseur peut être prise comme paramètre spécifique au catalyseur et/ou une ou des mesures effectuées dudit au moins un paramètre spécifique présentant une divergence par rapport aux autres mesures effectuées dépassant un niveau prédéterminé peuvent ne pas être prises en compte pour le calcul de la moyenne.

Le niveau prédéterminé est un niveau impliquant une trop grande divergence et permet d'éliminer des mesures aberrantes. Par exemple, une divergence de plus de 10 % d'une valeur mesurée par rapport aux autres peut impliquer l'élimination de cette valeur mesurée de la moyenne du paramètre spécifique au catalyseur, ce qui n'est pas limitatif.

Dans un mode de réalisation préférentiel de la présente invention, le procédé d'estimation du vieillissement d'un catalyseur peut conduire à une détection d'une conduite sévère accroissant les risques de vieillissement prématuré du catalyseur.

Ainsi, il peut être établi une courbe de paramètres d'évaluation réajustés qui est comparée avec une courbe de paramètres d'évaluation non réajustés ou courbe nominale, cette comparaison étant représentative sur l'effet des conditions réelles de conduite du véhicule automobile.

Quand il est préalablement défini une configuration spécifique d'un contrôle commande pour la limitation du vieillissement du catalyseur comprenant notamment des délais d'application des consignes de richesse, de limitation du taux de balayage, etc., cette configuration spécifique est reconfigurée en tenant compte de la comparaison des courbes de paramètres d'évaluation dans le sens d'une meilleure protection du catalyseur.

Il peut ainsi être défini une conduite dite sévère par comparaison entre les deux courbes réajusté et nominale quand les courbes divergent au dessous d'un seuil prédéterminé, une information quant à la criticité du mode de conduite pour le vieillissement du catalyseur pouvant être émise, comme quoi la conduite du véhicule suivie peut être préjudiciable à un vieillissement normal du véhicule.

Le seuil est suffisamment élevé pour ne pas impliquer une caractérisation de conduite dite sévère pour une faible divergence tout en restant assez bas pour détecter des conduites commençant à avoir un effet sur le vieillissement du catalyseur.

En effet, comme il est obtenu par mesure d'un paramètre spécifique au catalyseur conduisant à une détermination d'un paramètre d'évaluation réajusté une information sur le vieillissement réel du catalyseur, sa comparaison avec la courbe nominale permet de détecter un conducteur adoptant une conduite vieillissant prématurément son catalyseur. L'écart entre le kilométrage réajusté du catalyseur et le kilométrage du véhicule est représentatif de la sévérité du mode de conduite du conducteur pouvant affecter le vieillissement du catalyseur.

La détection d'une telle conduite peut s'avérer très utile pour configurer le contrôle commande pour la protection du catalyseur. Ceci peut se traduire par une réduction des délais d'application des consignes de richesse de protection du catalyseur, une limitation du taux de balayage, etc.

Cette configuration spécifique permet de limiter le vieillissement du catalyseur du véhicule automobile par l'application de réglages moins économes en carburant pour un nombre limité de conducteurs ayant une conduite sévère pour le vieillissement du catalyseur et pas pour ceux ayant un mode de conduite non dommageable pour le catalyseur, les réglages initiaux naturellement plus économes en carburant étant alors conservés.

La figure 2 représente le schéma de principe du procédé d'estimation du vieillissement d'un catalyseur selon la présente invention. A cette figure, le paramètre de fonctionnement du véhicule servant de paramètre d'évaluation du vieillissement du catalyseur est le kilométrage parcouru par le véhicule km véhicule et le paramètre spécifique au catalyseur conduisant à une détermination d'un paramètre d'évaluation réajusté est la capacité de stockage de l'oxygène du catalyseur Mes OSC. Ceci n'est pas limitatif.

L'étape la plus importante du procédé est la reconstruction d'un kilométrage représentatif du vieillissement du catalyseur en fonction d'un kilométrage réajusté tenant compte d'une ou de mesures de la capacité de stockage de l'oxygène indiqué sous l'abréviation Mes OSC, cette étape étant représentée par le rectangle référencé 4.

Cette étape tient compte du kilométrage du véhicule, le kilométrage ajusté du catalyseur ayant été lui-même reconstruit grâce à la cartographie de référence km_cata=f(Mes OSC) donnant le kilométrage ajusté en fonction de la capacité de stockage de l'oxygène mesuré.

Antérieurement, il peut être prévu une étape de diagnostic du catalyseur symbolisée par le rectangle référencé 5. Dans cette étape, il est réalisé des mesures de capacité de stockage de l'oxygène complètes requises en entrée de cette cartographie en délivrant une mesure brute ou Mes OSC brute.

Il peut être prévu une étape d'analyse des résultats de mesures symbolisée par le rectangle référencé 6 en charge de construire l'information de mesures de capacité de stockage de l'oxygène en entrée de la cartographie de référence symbolisée par le rectangle 7. L'étape d'analyse peut prévoir une demande de répétition de mesure de capacité de stockage de l'oxygène sous la dénomination répét Mes OSC vers l'étape de diagnostic référencée 5.

Lors de cette étape d'analyse référencée 6, il peut être rejeté les mesures de capacité de stockage de l'oxygène incohérentes avec les résultats précédents ou les autres mesures prises. Il peut être ensuite procédé à l'enregistrement puis à la moyenne des résultats de plusieurs mesures avant officialisation du résultat final le cas échéant. Ceci est symbolisé par le rectangle 8. Après la moyenne des mesures il est délivré une mesure moyenne traitée référencée Mes OSC traitée vers la cartographie référencée 7.

Une fois le kilométrage représentatif du vieillissement du catalyseur reconstruit, ce qui est fait à l'étape référencée par 4, deux étapes peuvent avoir lieu en parallèle.

D'une part, il peut être procédé de manière optionnelle à un dimensionnement symbolisé par le rectangle référencé 9 pour reconstruire un facteur de vieillissement Fact vieil sans unité en étant compris entre 0 et 1 ou à un kilométrage réajusté km ajust représentatif du vieillissement du catalyseur. Ce facteur de vieillissement Fact vieil ou kilométrage réajusté km ajust peut être envoyé au contrôle commande du véhicule apte à assurer la bonne gestion du vieillissement du catalyseur, ceci étant illustré en sortie du rectangle 9.

D'autre part, il peut être procédé à une étape de détection d'une conduite sévère symbolisée par le rectangle référencé 10. En calculant l'écart entre le kilométrage ajusté catalyseur et le kilométrage réel du véhicule, au-delà d'un seuil de divergence entre ces deux valeurs de kilométrage, il peut être remonté, avantageusement vers le contrôle commande du véhicule, une information quant à la criticité du mode de conduite conducteur pour le vieillissement du catalyseur, indiqué sous la référence Indic cond sév à la figure 2.

Un avantage de l'invention est la construction d'une unique information relative au vieillissement du catalyseur liée à une mesure réelle d'un paramètre d'évaluation de l'état catalyseur. Ceci permet d'optimiser les réglages de dépollution en fonction de l'état réel du catalyseur ainsi qu'une simplification du procédé d'estimation de vieillissement du catalyseur.

Un autre avantage de l'invention est l'exploitation de la mesure du paramètre d'évaluation de l'état du catalyseur pour détecter un conducteur ayant un mode de conduite sévère pour le vieillissement du catalyseur. Cela permet d'agir sur le contrôle moteur pour protéger plus efficacement le catalyseur pour un tel type de conducteur.

D'un point de vue technico-économique, les avantages sont donc :

- une réduction des émissions à la canule du catalyseur et donc un potentiel de réduction du grammage cata à iso émissions en sortie du moteur,
- une diminution du vieillissement catalyseur et donc la durabilité du système pour le conducteur,
- une absence de pénalité en consommation de carburant pour les conducteurs appliquant un cycle de conduite moins sévère pour le catalyseur et donc déjà plus économe en carburant.

De plus, les normes relatives aux émissions et à la consommation de carburant étant de plus en plus contraignantes, il y a toujours un intérêt à pouvoir affiner les réglages du contrôle moteur en fonction de l'état réel du catalyseur.

L'invention n'est nullement limitée aux modes de réalisation décrits et illustrés qui n'ont été donnés qu'à titre d'exemples.

## Revendications

1. Procédé d'estimation et de contrôle du vieillissement d'un catalyseur se trouvant dans la ligne d'échappement d'un véhicule automobile, dans lequel un paramètre de fonctionnement du véhicule, qui est le kilométrage parcouru par le véhicule automobile équipé du catalyseur, sert de paramètre d'évaluation du vieillissement du catalyseur, ce paramètre d'évaluation est ajusté en prenant en compte au moins un paramètre spécifique au catalyseur conduisant à une détermination d'un unique paramètre d'évaluation pour le suivi du vieillissement du catalyseur, le paramètre de fonctionnement du véhicule servant de paramètre d'évaluation initial est mesuré à un instant donné de même que ledit au moins un paramètre spécifique au catalyseur, un unique paramètre d'évaluation réajusté étant alors calculé selon ce paramètre spécifique au catalyseur mesuré, le paramètre d'évaluation réajusté remplaçant le paramètre d'évaluation initial quand représentatif d'un vieillissement plus prononcé du catalyseur, dans lequel il est établi une courbe de paramètres d'évaluation réajustés qui est comparée avec une courbe de paramètres d'évaluation non réajustés, cette comparaison étant représentative des conditions de conduite du véhicule automobile, **caractérisé en ce que**, quand il est préalablement défini une configuration spécifique d'un contrôle commande pour la limitation du vieillissement du catalyseur comprenant notamment des délais d'application des consignes de richesse, de limitation du taux de balayage, etc., cette configuration spécifique est reconfigurée en tenant compte de la comparaison des courbes de paramètres d'évaluation dans le sens d'une meilleure protection du catalyseur.

2. Procédé selon la revendication 1, dans lequel ledit au moins un paramètre spécifique est choisi parmi les paramètres suivants spécifiques au catalyseur ou est une combinaison d'au moins deux des paramètres suivants : la mesure de la capacité du catalyseur à stocker l'oxygène, la mesure de l'exotherme du catalyseur ou, quand la ligne d'échappement est équipée d'une sonde en sortie du catalyseur, la dérive de la richesse mesurée par la sonde ainsi que l'amplitude d'oscillation de la sonde.

3. Procédé selon l'une quelconque des revendications précédentes, dans lequel une moyenne de plusieurs mesures effectuées dudit au moins un paramètre spécifique au catalyseur est prise comme paramètre spécifique au catalyseur.

4. Procédé selon la revendication précédente, dans lequel une ou des mesures effectuées dudit au moins un paramètre spécifique présentant une divergence par rapport aux autres mesures effectuées dépassant un niveau prédéterminé ne sont pas prises en compte pour le calcul de la moyenne.

5. Procédé selon l'une quelconque des revendications précédentes, dans lequel le paramètre d'évaluation réajusté est calculé selon une cartographie (7) donnant ce paramètre d'évaluation en fonction dudit au moins un paramètre spécifique au catalyseur.

6. Procédé selon l'une quelconque des revendications précédentes, dans lequel il est défini une conduite dite sévère par comparaison entre les deux courbes quand les courbes divergent au dessous d'un seuil prédéterminé, une information quant à la criticité du mode de conduite pour le vieillissement du catalyseur étant émise.


**Patentansprüche**

1. Verfahren zur Schätzung und Steuerung der Alterung eines Katalysators, der sich in dem Auspuffstrang eines Kraftfahrzeugs befindet, wobei ein Betriebsparameter des Fahrzeugs, der die zurückgelegte Kilometerzahl des Kraftfahrzeugs, das mit dem Katalysator ausgestattet ist, ist, als Bewertungsparameter der Alterung des Katalysators dient, wobei dieser Bewertungsparameter eingestellt wird, indem mindestens ein spezifischer Parameter des Katalysators berücksichtigt wird, der zu einer Bestimmung eines einzigen Beurteilungsparameters für die Überwachung der Alterung des Katalysators führt, wobei der Betriebsparameter des Fahrzeugs, der als anfänglicher Bewertungsparameter dient, in einem gegebenen Augenblick ebenso wie ein spezifischer Parameter des Katalysators gemessen wird, wobei ein einziger angepasster Beurteilungsparameter gemäß diesem gemessenen spezifischen Parameter des Katalysators berechnet wird, wobei der angepasste Bewertungsparameter den anfänglichen Bewertungsparameter ersetzt, wenn er für eine ausgeprägtere Alterung des Katalysators repräsentativ ist, in dem eine Kurve angepasster Bewertungsparameter erstellt wird, die mit einer Kurve nicht angepasster Bewertungsparameter verglichen wird, wobei dieser Vergleich für die Fahrbedingungen des Kraftfahrzeugs repräsentativ ist, **dadurch gekennzeichnet, dass**, wenn vorab eine spezifische Konfiguration einer Führungsweise für das Einschränken der Alterung des Katalysators definiert wird, die insbesondere Anwendungsfristen der Reichhaltigkeitssollwerte, der Beschränkung der Abtastdaten usw. umfasst, diese spezifische Konfiguration unter Berücksichtigung des Vergleichs der Kurven von Beurteilungsparametern zum Zweck eines besseren Schutzes des Katalysators neu konfiguriert wird.

2. Verfahren nach Anspruch 1, wobei der mindestens eine spezifische Parameter aus den folgenden spezifischen Parametern des Katalysators ausgewählt ist oder eine Kombination von mindestens zwei der folgenden Parameter ist: die Messung der Kapazität des Katalysators, Sauerstoff zu speichern, die Messung des Exotherms des Katalysators oder, wenn der Auspuffstrang mit einer Sonde am Ausgang des Katalysators ausgestattet ist, der Drift der Reichhaltigkeit, die von der Sonde gemessen wird, sowie die Oszillationsamplitude der Sonde.

3. Verfahren nach einem der vorstehenden Ansprüche, wobei ein Durchschnitt mehrerer ausgeführter Messungen des mindestens einen spezifischen Parameters des Katalysators als spezifische Parameter des Katalysators genommen wird.

4. Verfahren nach dem vorstehenden Anspruch, bei dem eine oder mehrere ausgeführte Messungen des mindestens einen spezifischen Parameters, die eine Divergenz im Vergleich zu anderen ausgeführten Messungen aufweisen, die ein vorbestimmtes Niveau überschreitet, für die Berechnung des Durchschnitts nicht berücksichtigt werden.

5. Verfahren nach einem der vorstehenden Ansprüche, wobei der angepasste Bewertungsparameter gemäß einer Kartographie (7) berechnet wird, die diesen Bewertungsparameter in Abhängigkeit von dem mindestens einen spezifischen Parameter des Katalysators gibt.

6. Verfahren nach einem der vorstehenden Ansprüche, bei dem eine sogenannte schwere Fahrweise durch Vergleich zwischen den zwei Kurven definiert wird, bei der, wenn die Kurven unter einem vorbestimmten Schwellenwert divergieren, eine Information in Zusammenhang mit der Kritikalität des Fahrmotors für die Alterung des Katalysators ausgegeben wird.


**Claims**

1. A method for estimating and controlling the ageing of a catalyst located in the exhaust line of a motor vehicle, in which an operating parameter of the vehicle, which is the number of kilometres travelled by the motor vehicle equipped with the catalyst, serves as a parameter for evaluating the ageing of the catalyst, this evaluation parameter is adjusted taking into account at least one parameter specific to the catalyst, leading to a determining of a unique evaluation parameter for monitoring the ageing of the catalyst, the operating parameter of the vehicle serving as initial evaluation parameter is measured at a given time along with said at least one parameter specific to the catalyst, a unique readjusted evaluation parameter being then calculated according to this measured parameter specific to the catalyst, the readjusted evaluation parameter replacing the initial evaluation parameter when representative of a more pronounced ageing of the catalyst, in which there is established a curve of readjusted evaluation parameters which is compared with a curve of non-readjusted evaluation parameters, this comparison being representative of the driving conditions of the motor vehicle, **characterized in that**, when there is previously defined a specific configuration of a command control for the limitation of the ageing of the catalyst including in particular application time periods of the richness setpoints, limitation of the sweep rate, etc., this specific configuration is reconfigured taking into account the comparison of the curves of evaluation parameters in the sense of a better protection of the catalyst.

2. The method according to Claim 1, in which said at least one specific parameter is selected from the following parameters specific to the catalyst or is a combination of at least two of the following parameters: the measurement of the capacity of the catalyst to store oxygen, the measurement of the exotherm of the catalyst or, when the exhaust line is equipped with a probe at the outlet of the catalyst, the deviation of the richness measured by the probe and also the amplitude of oscillation of the probe.

3. The method according to any one of the preceding claims, in which an average of several measurements carried out of said at least one parameter specific to the catalyst is taken as parameter specific to the catalyst.

4. The method according to the preceding claim, in which one or several measurements carried out of said at least one specific parameter presenting a divergence with respect to the other measurements carried out exceeding a predetermined level are not taken into account for the calculation of the average.

5. The method according to any one of the preceding claims, in which the readjusted evaluation parameter is calculated according to a mapping (7) giving this evaluation parameter as a function of said at least one parameter specific to the catalyst.

6. The method according to any one of the preceding claims, in which there is defined a driving which is designated as severe by comparison between the two curves when the curves diverge below a predetermined threshold, with information being emitted regarding the criticality of the driving mode for the ageing of the catalyst.

OSC

0    50000   100000   150000   200000   250000   300000   350000
km

**FIG. 1**

**FIG. 2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8834820 B1
- DE 102007031768 A